# EUROPÄISCHE PATENTSCHRIFT

(11) **EP 0 657 090 B1**
(45) Veröffentlichungstag und Bekanntmachung des Hinweises auf die Patenterteilung: **15.05.1996**
(21) Anmeldenummer: 93919200.1
(22) Anmeldetag: 27.08.1993
(51) Int. Cl.: H05B 39/04, H02M 1/00, H02M 7/5383

(54) **AUTOMATISCHE NULLPUNKTERKENNUNG**
AUTOMATIC ZERO-POINT RECOGNITION
DETECTION AUTOMATIQUE DU ZERO

(30) Priorität: 28.08.1992 DE 4228646; 14.12.1992 DE 4242120
(43) Veröffentlichungstag der Anmeldung: 14.06.1995
(73) Patentinhaber: TRIDONIC BAUELEMENTE GMBH, A-6851 Dornbirn (AT)
(72) Erfinder: PICHLER, Bruno, A-6754 Klösterle (AT)
(74) Vertreter: Schmidt-Evers, Jürgen, Dipl.-Ing.
(86) Internationale Anmeldenummer: EP9302320
(87) Internationale Veröffentlichungsnummer: WO9406258

(56) Entgegenhaltungen:
- EP-A- 0 331 157
- EP-A- 0 466 031
- ELEKTRIE Bd. 41, Nr. 1, 1987, BERLIN(DDR) Seiten 11 - 13 BRUSEBERG ET AL. 'Elektronisches Netzteil fur Halogenniedervoltlampe 12V/50W' s

## Beschreibung

Die vorliegende Erfindung betrifft ein Vorschaltgerät zum Anschluß von Niedervolt-Lampen.

Allgemein werden zum Betreiben von Niedervolt-Lampen, die eine Spannung von üblicherweise 12 Volt benötigen, Transformatoren eingesetzt, die die Netzspannung von 220 Volt auf die benötigte Spannung heruntertransformieren. Solche Transformatoren haben jedoch ein entsprechend hohes Gewicht und eine hohe Verlustleistung. Außerdem ist die äußere Form eines solchen Transformators weitgehend vorgegeben, womit der Einbau in beliebige Gehäuse ausgeschlossen ist. Aus diesem Grund werden Schaltungen verwendet, die einen Gleichrichter enthalten, der, wie bei den Niederdruckgasentladungslampen, einen Wechselrichter betreibt. Im Unterschied zu den Vorschaltgeräten für Niederdruckgasentladungslampen ist die Last bei den Vorschaltgeräten für Niedervoltlampen jedoch ein Transformator, an den die Niedervolt-Lampen angeschlossen werden. Der Transformator arbeitet auf der Frequenz des Wechselrichters, also üblicherweise bei ca. 30 bis 50kHz. Daher kann er entsprechend kleiner als ein 50Hz-Transformator gestaltet werden.

Die bisherigen Vorschaltgeräte für Niedervoltlampen enthalten eine Schutzschaltung, die bei zu hohen Strömen wirksam wird. Aufgrund der charakteristischen Eigenschaft von Niedervolt-Lampen, die im kalten Zustand einen sehr kleinen Widerstand besitzen, fließt beim Einschalten ein sehr hoher Strom. Dieser sehr hohe Stromfluß bedingt wiederum im Vorschaltgerät sehr hohe Ströme, die zur Zerstörung von Bauelementen führen können. Die Schutzschaltung mißt nun den Strom des Ausgangstransformators und schaltet die vom Gleichrichter erzeugte Halbwelle an dem Punkt ab, an dem ein bestimmter Grenzwert des Stroms überschritten wird. Die Strommessung erfolgt dadurch, daß der Strom durch einen Widerstand geführt und an dem Widerstand der Spannungsabfall gemessen wird.

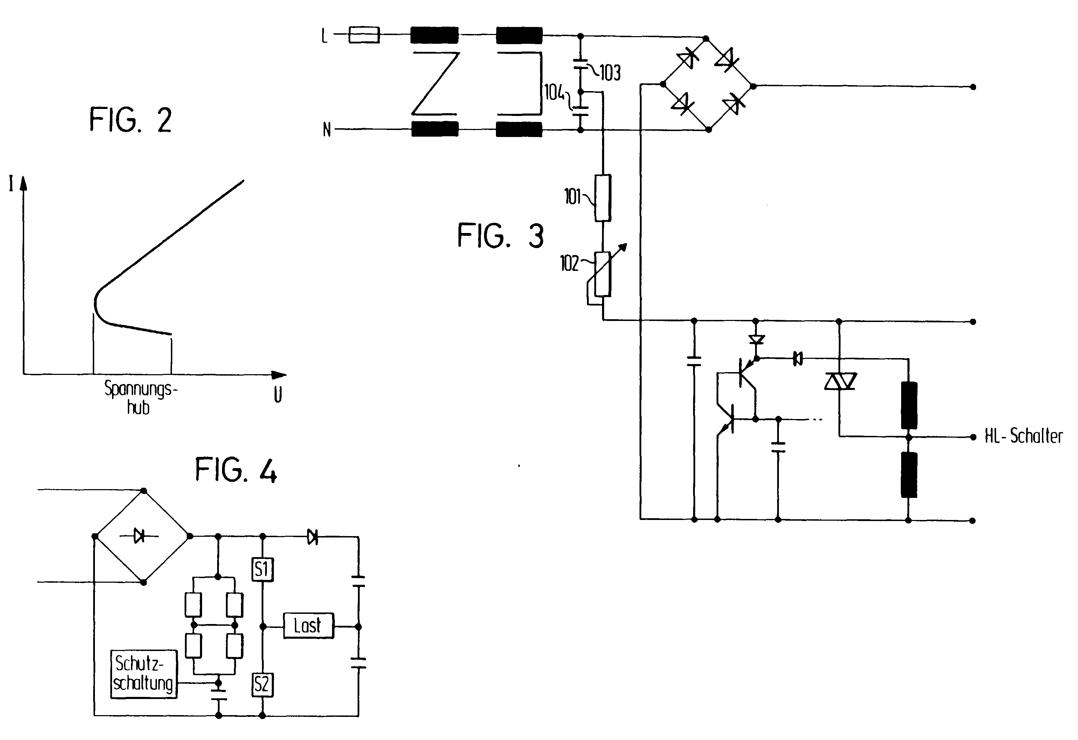

Die Figur 4 zeigt eine Schaltungsvariante nach dem Stand der Technik zur Messung des Laststroms. Die Last befindet sich in bekannter Weise zwischen dem Mittelabgriff einer Serienschaltung aus zwei Schaltern und dem Mittelabgriff einer Serienschaltung aus zwei Kondensatoren. Die beiden Serienschaltungen liegen dabei zwischen den beiden Ausgängen eines Gleichrichters. Die beiden Kondensatoren wirken am Ausgang des Gleichrichters wie eine Glättungsschaltung, d.h. an ihnen baut sich eine gewisse Grund-Gleichspannung auf. Die Höhe dieser Grundgleichspannung hängt von der Last ab, wobei sich die Last mit dem Erwärmungszustand der Lampe ändert. Diese Grund-Gleichspannung wirkt verfälschend auf die Schutzschaltung. Aus diesem Grund hat man bisher zwischen die in Serie geschalteten Kondensatoren und den Gleichrichter eine Diode geschaltet, wie in Figur 4 gezeigt. Die Meßspannung für die Schutzschaltung wurde dann zwishen dem Gleichrichter und der Diode ausgekoppelt.

Die zwischen dem Gleichrichter und der Diode ausgekoppelte Spannung war frei von der Grund-Gleichspannung an den Kondensatoren. Diese Maßnahme hatte jedoch den Nachteil, daß die Diode relativ stark sein mußte, da sie von einem hohen Strom durchflossen wurde. Dementsprechend war auch ein Leistungsverlust damit verbunden.

Darüberhinaus war ebenfalls bekannt, die Meßspannung für die Schutzschaltung zwischen dem Gleichrichter und der Diode mittels Widerständen auszukoppeln (vgl. Fig. 4). Wie gezeigt ist nicht nur ein einziger Widerstand, sondern zwei in Serie geschaltete Widerstandspaare, von denen jedes Paar für sich parallel geschaltet ist, angegeben. Die komplizierte Widerstandsschaltung wurde nur deshalb eingesetzt, weil nach der Spannungsbelastung erhältliche entsprechende Widerstände kombiniert werden mußten. Der von den beiden Widerstandspaaren abgeleitete Strom wird zu einem Kondensator geführt, um diesen zu laden. Die an diesem Kondensator abfallende Spannung wird zur Steuerung der Schutzschaltung verwendet.

Der Erfindung liegt die Aufgabe zugrunde, die Trenndiode zu vermeiden, ohne zusätzliche Bauelemente zu benötigen, und damit das Vorschaltgerät einfacher und billiger zu machen.

Die Aufgabe der vorliegenden Erfindung wird durch die kennzeichnenden Merkmale des Anspruchs 1 gelöst.

Vorteilhafte Ausgestaltungen der Erfindung sind in den Unteransprüchen angegeben.

Die Erfindung wird nachfolgend anhand von Ausführungsbeispielen näher erläutert. Es zeigen
Fig. 1 ein Schaltungsdiagramm eines Ausführungsbeispieles der Erfindung,
Fig. 2 ein Strom- Spannungsdiagramm eines Trigger-Elements;
Fig. 3 ein Schaltungsdiagramm eines weiteren Ausführungsbeispiels der Erfindung; und
Fig. 4 eine Schaltungsanordnung aus dem Stand der Technik.

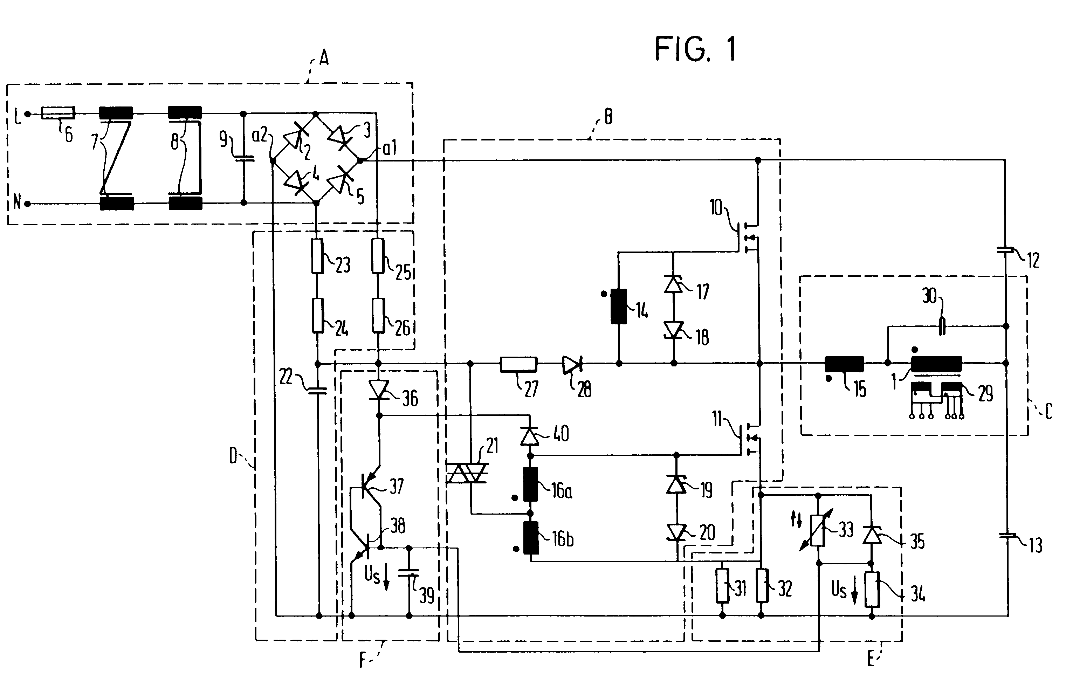

Figur 1 zeigt beispielhaft eine Schaltung zur Ansteuerung eines Transformators 1, der in der Zeichnung nicht dargestellte Niedervoltlampen, auch als Halogenlampen bezeichnet, mit einer Wechselspannung von üblicherweise 12 Volt speist. Zur besseren Erläuterung der in Figur 1 gezeigten Schaltung ist diese in mehrere funktionelle Blöcke A-F aufgeteilt.

Block A zeigt eine Gleichricherschaltung mit vier Gleichrichterdioden 2-5, die als Brückengleichrichter geschaltet sind. Gespeist werden diese Dioden 2-5 von einer am Eingang der Gleichrichterschaltung anliegenden Netzwechselspannung. Zum Schutz der Schaltung ist in einer Eingangsleitung eine Sicherung 6 vorgesehen, die beim Überschreiten eines maximal zulässigen Stroms abschaltet. Im Eingangskreis befinden sich darüberhinaus Drosseln bzw. Spulen 7,8 zur Funkentstörung, die aufgrund bestimmter Richtlinien und Normen notwendig ist. Vorzugsweise werden in jeder Eingangsleitung des Gleichrichters Induktivitäten geschaltet, die wie in Figur 1 gezeigt, in einem Fall gegensinnig 7 und im anderen Fall gleichsinnig 8 gekoppelt sind. Zur Unterdrückung von hochfrequenten Rückstrahlungen ins Versorgungsnetz sind die beiden Eingangsleitungen über einen Kondensator 9 miteinander verbunden.

Die zwischen den Ausgängen a1, a2 des Gleichrichters A liegende gleichgerichtete Wechselspannung wird einem Wechselrichter B zugeführt, der in dem beschriebenen Ausführungsbeispiel als selbstschwingender Wechselrichter ausgeführt ist. Selbstverständlich können auch zwangsgesteuerte Wechselrichter eingesetzt werden, die jedoch einen komplizierten und teuren Aufbau resultierend aus der notwendigen Ansteuerungsschaltung erfordern.

Der Aufbau und die Funktionsweise eines solchen Wechselrichters ist dem Fachmann allgemein bekannt, weshalb im folgenden nicht detailliert darauf eingangen wird.

Zwischen den beiden Eingangsleitungen des Wechselrichters liegt eine aus zwei steuerbaren Schaltern 10, 11, vorzugsweise Transistoren oder Feldeffekttransistoren (bspw. MOS-FET's) gebildete Serienschaltung. Ebenfalls zwischen den Eingängen liegt eine Serienschaltung aus zwei Kondensatoren 12, 13, wobei die beiden Serienschaltungen 10, 11 bzw. 12, 13 jeweils einen Brückenzweig bilden, die durch eine Last C miteinander verbunden sind. Der obere Feldeffekttransistor 10 wird über eine Sekundärwicklung 14 eines Sättigungsübertragers, der zwischen der Source und dem Gate des FETs 10 liegt, angesteuert. Die Primärwicklung 15 des Sättigungsübertragers liegt im Lastkreis C. Die Ansteuerung des unteren Feldeffekttransistors 11 weist einen der Ansteuerung des oberen Feldeffekttransistors entsprechenden Aufbau auf, wobei die Sekundärwicklung 16a, 16b jedoch in zwei in Serie geschaltete Wicklungen aufgeteilt ist. Um ein alternierendes Schalten der beiden Feldeffekttransistoren 10, 11 zu ermöglichen, ist die Sekundäwicklung 14 des oberen FETs gegensinnig zu derjenigen des unteren FETs 11 angeordnet. Zum Schutz der beiden Feldeffekttransistoren 10, 11 vor Überspannungen sind parallel zu den Sekundärwicklungen 14 bzw. 16 jeweils entgegengesetzt in Serie geschaltete Zehnerdioden 17, 18 bzw. 19, 20 angeordnet. Zwischen den beiden Sekundärwicklungen 16a, 16b greift ein Triggerelement 21 an, das den Wechselrichter mit der doppelten Netzfrequenz zum hochfrequenten Schwingen, vorzugsweise etwa 30kHz, mittels eines Triggersignals anregt. Normalerweise ist ein solches Triggern von selbstschwingenden Wechselrichtern nicht notwendig, da diese meist, wie bei Vorschaltgeräten für Gasniederdrucklampen, mit einer konstanten Gleichspannung versorgt werden, beispielsweise über einen Hochsetzsteller. Im vorliegenden Fall bekommt der Wechselrichter jedoch aus Kostengründen eine gleichgerichtete Wechselspannung zugeführt, die das selbstständige Schwingen nach jeder Halbwelle unterbrechen würde. Die Energie zum Triggern bekommt das Triggerelement 21 von einem Kondensator 22, der über einen am Netz angeschlossenen und aus jeweils zwei Widerständen 23, 24 bzw. 25, 26 bestehenden Spannungsteiler aufgeladen wird (Block D).Am Spannungsteilermittelabgriff ist auch eine aus einem Widerstand 27 und einer Diode 28 gebildete Serienschaltung angeschlossen, deren anderes Ende, nämlich die Kathode der Diode 28, an der Source des oberen Feldeffekttransistors 10 liegt.

Wie bereits angedeutet, verbindet der Lastkreis C die beiden Brückenzweige 10, 11 bzw. 12, 13. Im Lastkreis C selbst liegen die Primärwicklung 15 des Sättigungsübertragers und ein Transformator 1 in Reihe. Der Transformator 1 versorgt über Sekundärwicklungen 29 die Niedervoltlampen mit der benötigten Spannung. Parallel zu diesem Transformator 1 liegt ein Kondensator 30, der die Aufgabe hat, die Verlustleistung der Feldeffekttransistoren 10, 11 zu senken.

In Serie zu den Feldeffekttransistoren 10, 11 liegt ein Strommeßglied E, das über mehrere Widerstände 31-34 die Source des unteren Feldeffekttransistors 11 mit dem am Ausgang des Gleichrichters a2 anliegenden Bezugspotential verbindet. Das Strommeßglied E umfaßt einen niederohmigen Widerstand 31, über den der Großteil des Laststroms fließt. Da dieser Strom sehr hoch sein kann, ist in der gezeigten Schaltung ein weiterer niederohmiger Widerstand 32 parallelgeschaltet, um die aufgenommene Leistung pro Widerstand zu verringern. An diesem Widerstand bzw. an diesen Widerständen 31, 32 fällt eine dem Lampenstrom proportionale Spannung ab, die über einen Spannungsteiler 33, 34 an eine Schutzschaltung F weitergeleitet wird. Der obere, vorzugsweise einstellbare, Widerstand 33 ist einer Zenerdiode parallelgeschaltet, die bei Übersteigen einer bestimmbaren an ihr abfallenden Spannung durchschaltet. Auf deren Zweck wird später noch eingegangen.

Die Schutzschaltung F umfaßt eine Serienschaltung aus einer Diode 36 und zwei komplementären Transistoren 37, 38, die so geschaltet sind, daß der Emitter des PNP-Transistors 37 an der Kathode der Diode 36 liegt, der Kollektor dieses Transistors 37 zur Basis des zweiten NPN-Transistors 38 führt, dessen Kollektor wiederum mit der Basis des ersten Transistors 37 verbunden ist. Der Emitter des zweiten Transistors 38 liegt auf Bezugspotential, während die Anode der Diode 36 am Mittelabgriff des Spannungsteilers 23-26 angeschlossen ist. Das von dem Strommeßglied E gelieferte Signal wird der Basis des zweiten Transistors 38 zugeführt. Zwischen Basis und Bezugspotential liegt ein zum Schutz vorgesehener Kondensator 39.

Zwischen der Anode der Diode 36 und dem Gate des unteren Feldeffekttransistors 11 ist über eine weitere Diode 40, deren Anode am Gate anliegt eine Verbindung hergestellt.

Nun zur Funktionsweise der einzelnen Blöcke, wobei jedoch auf dem Fachmann bekannte Tatsachen, wie Funktion des Gleichrichters oder Wechselrichters nicht detailliert eingegangen wird.

Wie bereits erwähnt, muß der selbstschwingende Wechselrichter B getriggert werden, da aufgrund der dem Wechselrichter zugeführten gleichgerichteten Wechselspannung ein selbständiges Schwingen nur während einer Netzhalbwelle erfolgen würde. Um auf eine Triggerung verzichten zu können, müßte man dem Wechselrichter eine möglichst glatte Gleichspannung zur Verfügung stellen. Dazu wären Glättungsglieder am Ausgang des Gleichrichters, wie beispielsweise Elektrolytkondensatoren, erforderlich, die jedoch die Kurvenform des aufgenommenen Stroms verzerren würden. Die Folge davon wären ungünstige Rückstrahlungen ins Netz, die nur durch aufwendige Filterschaltungen zu vermeiden wären. Man ist also bestrebt, daß die Stromaufnahmekurve möglichst sinusförmig verläuft.

Die Triggerung erfolgt durch das Triggerelement 21, vorzugsweise ein SBS (Silicon Bilateral Switch, z. B. MBS 4991 Motorola) oder ein PUT (Programmable-Unit-Junction- Transistor) - Element. Diese liefern bei Überschreitung der an ihnen anliegenden Spannung über einen elementspezifischen Wert ein Spannungssignal an den Steuerkreis des unteren Feldeffekttransistors 11. Bei den eben benannten Triggerelementen liegen die Triggerspannungen deutlich unter der Triggerspannung eines DIACS, die etwa 32 V beträgt. So triggern die SBS-Elemente bei einer Spannung von 8 - 10 V und die PUT-Elemente bei 3 - 50 V. Die Triggersignale werden mit doppelter Netzfrequenz zur Verfügung gestellt. Die notwendige Energie bezieht das Triggerelement 21 vom Kondensator 22, der über den Spannungsteiler 23 - 26 aufgeladen wird. Die Verlustleistung der Widerstände 23 - 26 des Spannungsteilers bestimmen sich unter anderem nach der zum Triggern notwendigen Spannung, d.h. je niedriger diese Spannung sein kann, desto geringer gestaltet sich die Verlustleistung. Andererseits benötigen die Feldeffekttransistoren 10, 11 einen bestimmten ersten höheren Spannungswert, die sogenannte threshold-Spannung (1,5 - 4,5 Volt), um in Funktion zu treten. Die Triggerelemente müssen demnach so beschaffen sein, daß sie einen Spannunghub aufweisen, der zumindest gleich oder größer als der erwähnte Schwellenspannungswert der FETs ist. Unter Spannungshub versteht man den Spannungsbereich zwischen der Durchbruchspannung und derjenigen Spannung des Triggerelements, auf die die Spannung nach dem Durchbruch zurückgeht, um danach linear wieder anzusteigen, wie in dem Strom-Spannungs-Diagramm der Figur 2 gezeigt.

DIACS besitzen üblicherweise einen Spannungshub von 5 V, ein SBS-Element dagegen 8 - 10 V und PUT-Elemente haben einen einstellbaren Spannungshub der auf jeden Fall auf über 5 V einstellbar ist.

In diesem Zusammenhang ist noch zu erwähnen, daß die Zweiteilung der Sekundärwicklung 16 im Steuerkreis des unteren Feldeffekttransistors 11 unter anderem aufgrund der geringen Triggerspannung vorgenommen wird, um ein Triggern des Triggerelements zwischen Halbwellen zu verhindern. Durch entsprechende Wahl des Wicklungsverhältnisses zwischen der oberen 16a und der unteren 16b Sekundärwicklung kann dies erreicht werden. Die Gesamtinduktivität der beiden Sekundärwicklungen 16 entspricht dabei derjenigen der Sekundärwicklung 14 im Steuerkreis des oberen Feldeffekttransistors 10.

Eine weitere Maßnahme zur Vermeidung von unkontrolliertem Triggern ist in Form der Diode 28 getroffen, die den Kondensator 22 regelmäßig, und zwar mit jeder Schwingung des Wechselrichters, über diese Diode 28 und den Feldeffekttransistor 11 entlädt und die am Kondensator 22 abfallende Spannung auf Null setzt. Während dieses Entladevorgangs fließt auch ein Strom über die Widerstände 22 - 26 des Spannungsteilers, der einen weiteren Beitrag zu der zuvor erwähnten Verlustleistung liefert. Die Widerstände 23 - 26 sind hochohmig zu wählen, wobei jedoch zu beachten ist, daß dadurch auch die Zeitkonstante des RC - Glieds der Widerstände 23 - 26 und des Kondensators 22 steigt. Die Zeitkonstante bestimmt eine Totzeit, die den Zeitraum zwischen Nulldurchgang der Netzhalbwelle und Zünden des Triggerlements definiert. Diese Totzeit sollte möglichst klein sein. Andererseits muß der Kondensator 22 eine Mindestkapazität aufweisen, die von der nötigen Energie zum Triggern abhängt.

Das Strommeßglied E dient zum Messen des Lampenstroms. Eine Schutzschaltung F, die das Signal des Meßgliedes E auswertet, soll die Wechselrichterschaltung vor zu hohen Strömen schützen, die aufgrund des besonderen Verhaltens von Niedervoltlampen bzw. allgemein von Lampen mit Glühwendeln kurz nach dem Einschalten auftreten können. Die Glühwendeln der Lampe haben bekanntlich einen sehr kleinen Widerstand solange sie kalt sind, der sich jedoch bei Erwärmung deutlich erhöht.

Die an den Widerständen 31, 32 abfallende durch den durch den Transformator 1 fließenden Strom verursachte Spannung wird von einem Spannungsteiler 33, 34 aufgenommen und an die Schutzschaltung F, und dort an die Basis des unteren Transistors 38, übermittelt. Überschreitet diese Spannung U_{S,} die proportional zum Lampenstrom ist, die Transistorschaltspannung, von in diesem Fall 0,7 Volt, schaltet dieser Transistor 38 durch, d.h. er leitet. Die Basis des oberen Transistors 37 ist nun gegenüber seinem Emitter negativ vorgespannt, wodurch auch dieser Transistor 38 leitet. Die Folge ist, daß sich der Kondensator 22 über die Diode 36 und die Transistoren 37, 38 entlädt und ein Neutriggern des Wechselrichters verhindert. Darüber hinaus liegt auch das Gate des unteren Feldeffekttransistors 11 über die Diode 40 und die Transistoren 37, 38 am Bezugspotential, wodurch die Schwingung des Wechselrichters unterbrochen wird. Die Unterbrechung, und damit auch die Versorgung der Lampen, erfolgt solange, bis der gemessene Strom wieder unter den vorbestimmten Grenzwert sinkt und der Wechselrichter wieder neu getriggert wird. Die Strommessung erfolgt ohne den Einfluß einer Grund-Gleichspannung, die sich an den Kondensatoren 12, 13 aufbaut.

Die zum oberen Widerstand 33 des Spannungsteilers des Meßglieds parallel angeordnete Zenerdiode 35 dient der schnellen Abschaltung bei Stromüberhöhung. Sobald der von der Zenerdiode 35 vorgegebene Spannungswert, beispielsweise 2,4 Volt, überschritten wird, wird diese leitend und die volle Spannung von > 2,4 Volt der Schutzschaltung F zugeführt, die sofort reagiert und abschaltet. Mit Hilfe des einstellbaren Widerstands 33, vorzugsweise ein Potentiometer, läßt sich die Ansprechschwelle der Schutzschaltung F einstellen.

Figur 3 zeigt eine Variante der Schaltung aus Figur 1. Hierin ist der Block D mit Spannungsteiler und Triggerkondensator modifiziert ausgestaltet. Der aus vier Widerständen 23-26 bestehende Spannungsteiler gemäß Figur 1 wurde durch eine Serienschaltung aus zwei Widerständen 101, 102, wobei zumindest ein Widerstand 102 einstellbar ist, ersetzt. Die Serienschaltung liegt am Mittelabgriff einer Serienschaltung an, die aus zwei Kondensatoren 103, 104 gebildet wird und den in Figur 1 gezeigten Kondensator 9 zwischen den Eingängen des Gleichrichters ersetzt. Die Wirkung dieser geänderten Schaltung entspricht der Anordnung gemäß Figur 1.

## Patentansprüche

1. Selbstschwingender Wechselrichter für eine Last, insbesondere für eine Niedervoltlampe, mit
einer Brücken-Gleichrichterschaltung (2-5), die eine gleichgerichtete Wechselspannung an zwei Ausgangsanschlüssen (a1,a2) bereitstellt,
einer Serienschaltung aus zwei steuerbaren Schaltern (10, 11), welche die beiden Ausgangsanschlüsse (a1,a2) der Gleichrichterschaltung verbindet,
einer Serienschaltung aus zwei Kapazitäten (12; 13), die parallel zu den Schaltern (10, 11) angeordnet ist; und
einer Schutzschaltung (F), die mit einem Strommeßglied (E) für den Laststrom verbunden ist und bei einem zu hohen Laststrom den Wechselrichter abschaltet,
**dadurch gekennzeichnet,**
daß zwischen den beiden Eingangsanschlüssen der Gleichrichterschaltung (2-5) eine Spannungsteilerschaltung (23-26) angeordnet ist, und
daß die Versorgungsspannung für die Schutzschaltung (F) zwischen dem Mittelabgriff der Spannungsteilerschaltung (23-26) und einem Ausgangsanschluß (a2) der Gleichrichterschaltung (2-5) abgegriffen wird.

2. Wechseirichter nach Anspruch 1,
**dadurch gekennzeichnet,**
daß parallel zu der Schutzschaltung (F) eine Kapazität (22) angeordnet ist.

3. Wechselrichter nach einem der Ansprüche 1-2,
**dadurch gekennzeichnet,**
daß die Spannungsteilerschaltung (23-26) zwei oder vier Widerstände (23,24,25,26) aufweist.

4. Wechselrichter nach einem der Ansprüche 1-2,
**dadurch gekennzeichnet,**
daß die Spannungsteilerschaltung zwei Kapazitäten (103,104) aufweist.

5. Wechselrichter nach einem der Ansprüche 1-4,
**dadurch gekennzeichnet,**
daß eine Last (1) den Mittelabgriff der Serienschaltung der beiden Schalter (10,11) mit dem Mittelabgriff der Serienschaltung der beiden Kapazitäten (12,13) verbindet.

6. Wechselrichter nach Anspruch 5,
**dadurch gekennzeichnet,**
daß die Last einen Transformator (1) zur Versorgung der Niedervoltlampe und eine Primärwicklung (15) eines weiteren Transformators aufweist, wobei jeweils eine Sekundärwicklung des weiteren Transformators in jeweils einem Steuerkreis der beider steuerbaren Schalter (10, 11) liegt.

7. Wechselrichter nach Anspruch 6,
**dadurch gekennzeichnet,**
daß dem Transformator (1) eine Kapazität (30) parallel geschaltet ist.

8. Wechselrichter nach einem der Ansprüche 1-7,
**dadurch gekennzeichnet,**
daß das Strommeßglied (E) zu der Serienschaltung der beiden Schalter (10,11) in Serie liegt.

9. Wechselrichter nach Anspruch 8,
**dadurch gekennzeichnet,**
daß das Strommeßglied (E) einen Strom-Meßwiderstand (31;32) und/oder eine Strom-Meßwiderstandsschaltung (31,32) aufweist.

10. Wechselrichter nach Anspruch 9,
**dadurch gekennzeichnet,**
daß parallel zu dem Strom-Meßwiderstand (31;32) ein weiterer Spannungsteiler (33-35) angeordnet ist, dessen Mittelabgriff mit der Schutzschaltung (F) verbunden ist.

11. Wechselrichter nach Anspruch 10,
**dadurch gekennzeichnet,**
daß ein Widerstand des weiteren Spannungsteilers (33-35) einstellbar oder veränderlich ist.

12. Wechselrichter nach Anspruch 11,
**dadurch gekennzeichnet,**
daß der einstellbare oder veränderliche Widerstand ein NTC-Widerstand ist, der thermisch mit dem Transformator (1) gekoppelt ist.

13. Wechselrichter nach einem der Ansprüche 11-12,
**dadurch gekennzeichnet,**
daß antiparallel zu einem Widerstand (33) des weiteren Spannungsteilers eine Zenerdiode (35) angeordnet ist.

14. Wechselrichter nach einem der Ansprüche 1-13,
**dadurch gekennzeichnet,**
daß die Schutzschaltung (F) eine Serienschaltung aus einer Diode (36) und einem steuerbaren Schutzschalter (37,38) ist, wobei der Schutzschalter (37,38) abhängig von dem Strommeßsignal des Strommeßglieds (E) gesteuert ist.

15. Wechselrichter nach Anspruch 14,
**dadurch gekennzeichnet,**
daß ein Steuerausgang der Schutzschaltung (F) mit dem Steuereingang eines der beiden steuerbaren Schalter (10,11) verbunden ist, so daß bei Aktivierung der Schutzschaltung (F) der steuerbare Schalter (10,11) gesperrt wird und der Wechselrichter abschaltet.

16. Wechselrichter nach Anspruch 14,
**dadurch gekennzeichnet,**
daß der Schutzschalter (37,38) eine Schaltung aus zwei komplementären Transistoren ist, wobei die Basis eines pnp-Transistors (37) mit dem Kollektor eines npn-Transistors (38) und der Kollektor des pnp-Transistors (37) mit der Basis des npn-Transistors (38) verbunden ist und das Strommeßsignal an der Basis des npn-Transistors (38) anliegt.

17. Wechselrichter nach Anspruch 16,
**dadurch gekennzeichnet,**
daß zwischen Basis und Emitter des npn-Transistors (38) eine Kapazität (39) angeordnet ist.

## Claims

1. Free-running inverter for a load, in particular for a low-voltage lamp, having
a bridge rectifier circuit (2-5), which makes a rectified a.c. voltage available at two output terminals (a1, a2),
a series circuit of two controllable switches (10, 11), which connects the two output terminals (a1, a2) of the rectifier circuit,
a series circuit of two capacitances (12; 13), which is arranged in parallel to the switches (10, 11); and
a protection circuit (F), which is connected with a current measurement member (E) for the load current, and switches the inverter off at too high a load current.
characterised in that,
a voltage divider circuit (23-26) is arranged between the two input terminals of the rectifier circuit (2-5), and in that the supply voltage for the protection circuit (F) is taken between the middle tap of the voltage divider circuit (23-26) and an output terminal (a2) of the rectifier circuit (2-5).

2. Inverter according to claim 1,
characterised in that,
a capacitance (22) is arranged parallel to the protection circuit (F).

3. Inverter according to claim 1 or 2,
characterised in that,
the voltage divider circuit (23-26) has two or four resistances (23, 24, 25, 26).

4. Inverter according to claim 1 or 2,
characterised in that,
the voltage divider circuit has two capacitances (103, 104).

5. Inverter according to any of claims 1 to 4,
characterised in that,
a load (1) connects the middle tap of the series circuit of the two switches (10, 11) with the middle tap of the series circuit of the two capacitances (12, 13).

6. Inverter according to claim 5,
characterised in that,
the load has a transformer (1) for supplying the low-voltage lamp and a primary winding (15) of a further transformer, respective secondary windings of the further transformer lying in respective control circuits of the two controllable switches (10, 11).

7. Inverter according to claim 6,
characterised in that,
a capacitance (30) is connected in parallel with the transformer (1).

8. Inverter according to any of claims 1 to 7,
characterised in that,
the current measurement member (E) lies in series with the series circuit of the two switches (10, 11).

9. Inverter according to claim 8,
characterised in that,
the current measurement member (E) is a current measurement resistance (31; 32) and/or a current measurement resistance circuit (31, 32).

10. Inverter according to claim 9,
characterised in that,
a further voltage divider (33-35) is arranged parallel to the current measurement resistance (31; 32), the middle tap of which voltage divider is connected with the protection circuit (F).

11. Inverter according to claim 10,
characterised in that,
the resistance of the further voltage divider (33-35) is settable or variable.

12. Inverter according to claim 11,
characterised in that,
the settable or variable resistance is an NTC thermistor, which is thermally coupled with the transformer (1).

13. Inverter according to claim 11 or 12,
characterised in that,
a Zener diode (35) is arranged antiparallel to a resistance (33) of the further voltage divider.

14. Inverter according to any of claims 1 to 13,
characterised in that,
the protection circuit (F) is a series circuit of a diode (36) and a controllable protection switch (37, 38), the controllable protection switch (37, 38) being controlled in dependence upon the current measurement signal of the current measurement member (E).

15. Inverter according to claim 14,
characterised in that,
the control output of the protection circuit (F) is connected with the control input of one of the two controllable switches (10, 11), so that upon activation of the protection circuit (F) the controllable switch (10, 11) is blocked and the inverter switched off.

16. Inverter according to claim 14,
characterised in that,
the protection circuit (37, 38) is a circuit of two complementary transistors, the base of a pnp transistor (37) being connected with the collector of an npn transistor (38), and the collector of the pnp transistor (37) being connected with the base of the npn transistor (38), and the current measurement signal is applied to the base of the npn transistor (38).

17. Inverter according to claim 16,
characterised in that,
a capacitance (39) is arranged between base and emitter of the npn transistor (38).

## Revendications

1. Onduleur à oscillation auto-entretenue pour une charge, notamment pour une lampe basse tension, comprenant
un circuit redresseur (2-5) en pont qui délivre une tension alternative redressée à deux bornes de sortie (a1, a2),
un circuit série formé de deux interrupteurs (10, 11) commandés qui relie les deux bornes de sortie (a1, a2) du circuit redresseur,
un montage série formé de deux capacités (12; 13) qui est placé en parallèle avec les interrupteurs (10, 11) et
un circuit de protection (F) qui est connecté à un organe de mesure (E) du courant de charge et coupe l'onduleur dans le cas d'un courant de charge trop élevé,
caractérisé par le fait
qu'un circuit diviseur de tension (23-26) est placé entre les deux bornes d'entrée du circuit redresseur (2-5) et
que la tension d'alimentation du circuit de protection (F) est prélevée entre le point médian du circuit diviseur de tension (23-26) et une borne de sortie (a2) du circuit redresseur (2-5).

2. Onduleur selon la revendication 1, caractérisé par le fait qu'une capacité (22) est placée en parallèle avec le circuit de protection (F).

3. Onduleur selon l'une des revendications 1-2, caractérisé par le fait que le circuit diviseur de tension (23-26) comporte deux ou quatre résistances (23, 24, 25, 26).

4. Onduleur selon l'une des revendications 1-2, caractérisé par le fait que le circuit diviseur de tension comporte deux capacités (103, 104).

5. Onduleur selon l'une des revendications 1 à 4, caractérisé par le fait qu'une charge (1) relie le point médian du circuit série formé des deux commutateurs (10, 11) au point médian du circuit série formé des deux capacités (12, 13).

6. Onduleur selon la revendication 5, caractérisé par le fait que la charge comprend un transformateur (1) alimentant la lampe à basse tension et un enroulement primaire (15) d'un transformateur supplémentaire, un enroulement secondaire du transformateur supplémentaire étant placé dans chacun des circuits de commande des deux interrupteurs (10, 11) commandés.

7. Onduleur selon la revendication 6, caractérisé par le fait qu'une capacité (30) est branchée en parallèle avec le transformateur (1).

8. Onduleur selon l'une des revendications 1 à 7, caractérisé par le fait que l'organe de mesure de courant(E) est monté en série avec le circuit série des deux interrupteurs (10, 11).

9. Onduleur selon la revendication 8, caractérisé par le fait que l'organe de mesure de courant (E) est une résistance de mesure de courant (31; 32) et/ou un circuit (31, 32) de résistances de mesure de courant.

10. Onduleur selon la revendication 9, caractérisé par le fait qu'un diviseur de tension (33-35) supplémentaire, dont le point médian est connecté au circuit de protection (F), est placé en parallèle avec la résistance de mesure de courant (31; 32).

11. Onduleur selon la revendication 8, caractérisé par le fait qu'une résistance du diviseur de tension (33-35) supplémentaire est ajustable ou variable.

12. Onduleur selon la revendication 11, caractérisé par le fait que la résistance ajustable ou variable est une résistance CTN qui est couplé sur le plan thermique au transformateur (1).

13. Onduleur selon l'une des revendications 11-12, caractérisé par le fait qu'une diode Zener (35) forme un montage anti-parallèle avec une résistance (33) du diviseur de tension supplémentaire.

14. Onduleur selon l'une des revendications 1 à 13, caractérisé par le fait que le circuit de protection (F) est un circuit série formé d'une diode (36) et d'un disjoncteur (37, 38) commandé, le disjoncteur (37, 38) étant commandé en fonction du signal de l'organe de mesure de courant (E).

15. Onduleur selon la revendication 14, caractérisé par le fait qu'une sortie de commande du circuit de protection (F) est connectée à l'entrée de commande de l'un des deux interrupteurs commandés (10, 11) de sorte que lors de l'activation du circuit de protection (F) l'interrupteur commandé (10, 11) soit bloqué et l'onduleur coupé.

16. Onduleur selon la revendication 14, caractérisé par le fait que le disjoncteur (37, 3 8) est un circuit formé de deux transistors complémentaires, la base d'un transistor pnp (37) étant connectée au collecteur d'un transistor npn (38) et le collecteur du transistor pnp (37) étant connectée à la base du transistor npn (38) et par le fait que le signal de mesure de courant est appliqué à la base du transistor npn (38).

17. Onduleur selon la revendication 16, caractérisé par le fait qu'une capacité (39) est placée entre la base et l'émetteur du transistor npn (38).
